(19) Europäisches Patentamt / European Patent Office / Office européen des brevets

(11) **EP 3 979 116 B1**

(12) **FASCICULE DE BREVET EUROPEEN**

(45) Date de publication et mention de la délivrance du brevet:
**29.11.2023 Bulletin 2023/48**

(21) Numéro de dépôt: **21200964.1**

(22) Date de dépôt: **05.10.2021**

(51) Classification Internationale des Brevets (IPC):
**G06F 21/60** (2013.01)   **G06F 21/62** (2013.01)
**H04W 12/08** (2021.01)   **H04L 9/40** (2022.01)

(52) Classification Coopérative des Brevets (CPC):
**G06F 21/6245; G06F 21/604; H04L 63/10; H04W 12/08**

(54) **PROCÉDÉ D'ADMINISTRATION DU TÉLÉVERSEMENT D'UN CONTENU PERSONNEL SUR UNE PLATEFORME WEB**

ADMINISTRATIONSPROZESS ZUM HOCHLADEN EINES PERSÖNLICHEN INHALTES AUF EINE WEBPLATTFORM

ADMINISTRATION PROCESS FOR UPLOADING A PERSONAL CONTENT ON A WEB PLATFORM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.10.2020 FR 2010137**

(43) Date de publication de la demande:
**06.04.2022 Bulletin 2022/14**

(73) Titulaire: **Commissariat à l'énergie atomique et aux énergies alternatives 75015 Paris (FR)**

(72) Inventeurs:
• **POPESCU, Adrian 91191 Gif-sur-Yvette Cedex (FR)**
• **DESHAYES CHOSSART, Jérôme 91191 Gif-sur-Yvette Cedex (FR)**
• **NGUYEN, Van Khoa 91120 PALAISEAU (FR)**

(74) Mandataire: **Brevalex Tour Trinity 1 B Place de la Défense 92400 Courbevoie (FR)**

(56) Documents cités:
**EP-A1- 2 426 969**   **US-A1- 2014 344 362**
**US-A1- 2014 344 948**

**Description**

## DOMAINE TECHNIQUE

Le domaine de l'invention est celui des techniques d'administration du téléversement d'éléments de contenu personnel d'un utilisateur sur une plateforme informatique.

## TECHNIQUE ANTÉRIEURE

L'utilisation omniprésente des plateformes Internet de type réseaux sociaux ou nuages informatiques montre que leurs services sont attrayants pour les utilisateurs. La plupart de ces plateformes mettent en place un modèle économique dans lequel l'accès est gratuit en échange de la monétisation des données personnelles d'utilisateur. L'inconvénient d'un tel modèle est que sa performance économique est corrélée au niveau de détail des profils utilisateurs déduits des données brutes. Or avec l'utilisation des techniques d'intelligence artificielle qui permettent de déduire des informations exploitables par les opérateurs de ces plateformes à partir des données partagées par les utilisateurs, l'intrusivité est susceptible de croître. Par ailleurs, ces techniques ne sont pas transparentes pour les utilisateurs. En conséquence, les données personnelles peuvent être utilisées d'une manière qui était imprévue par les utilisateurs lors du partage initial des données, avec des effets potentiellement sérieux sur la vie réelle de ces derniers par exemple dans le cadre d'une recherche d'emploi, de logement ou de crédit bancaire.

Le document D1 est considéré comme étant un document pertinent.

## EXPOSÉ DE L'INVENTION

L'invention est définie dans les revendications indépendantes 1, 10 et 11.

L'invention vise à proposer une technique permettant d'offrir une protection aux données personnelles susceptibles d'être téléversées sur des plateformes Internet. Elle propose pour ce faire un procédé mis en oeuvre par ordinateur d'administration du téléversement d'un élément de contenu personnel d'un utilisateur sur une plateforme informatique. Ce procédé comprend la détection dans l'élément d'une ou plusieurs instances d'une pluralité de classes d'un modèle de détection d'instances de classes et la détermination d'un score de présence de chaque instance. Ce procédé se poursuit avec la détermination, pour chacune des classes, d'un score de classe à partir des scores de présence des instances de la classe et d'un score d'impact associé à la classe, les scores d'impact associés aux classes du modèle de détection étant spécifiques d'une situation donnée de la vie réelle de l'utilisateur, puis avec la d'un score d'exposition de l'élément à partir des scores de classe. Sur la base du score d'exposition de l'élément le procédé comprend alors la détermination d'un niveau de restriction d'accès à associer à l'élément dans une liste de contrôle d'accès aux données personnelles.

Grâce à la détection d'instances de classes d'un modèle de détection dans l'élément de contenu personnel et aux scores d'impact attribués aux classes, l'invention permet de quantifier l'impact sur des situations de vie réelle d'utilisateur de la mise à disposition sur une plateforme web dudit élément. Il s'avère ainsi possible de définir automatiquement un niveau de restriction approprié pour cet élément dans un mécanisme de contrôle d'accès aux éléments de contenu personnel.

Certains aspects préférés mais non limitatifs de ce procédé sont les suivants :

Il comprend en outre la consultation de ladite liste de contrôle d'accès pour vérifier si le niveau de restriction d'accès associé à l'élément interdit son téléversement sur la plateforme informatique ;

La consultation de ladite liste de contrôle d'accès vient également vérifier si le niveau de restriction d'accès associé à l'élément déconseille ou autorise son téléversement sur la plateforme informatique ;

Il est mis en oeuvre pour chaque élément d'une pluralité d'éléments de contenu personnel de l'utilisateur ;

Il comprend en outre la détermination d'un score d'exposition de l'utilisateur à partir des scores d'exposition des éléments de contenu personnel de l'utilisateur ;

Le score d'exposition de l'utilisateur est comparé à un score d'exposition de référence ; Un score de présence nul est attribué à une instance d'une classe lorsqu'un niveau de détection de ladite instance est inférieur à un seuil ;

Chaque score d'impact associé à une classe du modèle de détection est un score prédéterminé à partir de scores fournis par une communauté d'utilisateurs ;

L'élément de contenu personnel de l'utilisateur est une photographie et les classes du modèle de détection sont des classes d'objets.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

[Fig. 1] la figure 1 est un schéma d'un dispositif de traitement de données comprenant des moyens configurés pour mettre en oeuvre le procédé selon l'invention ;
[Fig. 2] la figure 2 est un ordinogramme illustrant l'enchaînement des étapes du procédé selon l'invention.

## EXPOSÉ DÉTAILLÉ DE MODES DE RÉALISATION PARTICULIERS

L'invention porte sur un procédé mis en oeuvre par ordinateur d'administration du téléversement d'éléments de contenu personnel d'un utilisateur sur une plateforme informatique, par exemple une plateforme de réseautage social ou une plateforme de type nuage informatique. Ce procédé permet d'automatiser la protection des données personnelles de l'utilisateur en venant déterminer un niveau de restriction approprié pour chaque élément de contenu personnel dans un mécanisme de contrôle d'accès aux éléments de contenu personnel. Ce mécanisme peut être implémenté pour contrôler l'accès de l'utilisateur à ses éléments de contenu personnel pour un partage (en mode public ou privé) sur la plateforme et/ou pour contrôler un accès de la plateforme aux éléments de contenu personnel de l'utilisateur. Il est de préférence implémenté avant tout téléversement d'un élément de contenu personnel sur la plateforme.

Ce procédé peut être implémenté sur un terminal de l'utilisateur, par exemple un téléphone intelligent, une tablette ou un ordinateur portable. Un programme d'ordinateur dédié à la mise en oeuvre du procédé, prenant par exemple la forme d'une application logicielle, peut à cet effet être téléchargé et installé sur le terminal de l'utilisateur.

Les éléments de contenu personnel de l'utilisateur qui sont susceptibles d'être téléversés sur la plateforme informatique peuvent être stockés sur le terminal de l'utilisateur. Alternativement, tout ou partie de ces éléments peuvent être stockés sur un ou plusieurs serveurs distants et rapatriés pour traitement.

Les éléments de contenu personnel comprennent typiquement des contenus textuels, des contenus visuels (images, en particulier des photographies ; vidéos), des contenus liés à l'activation de boutons (comme par exemple un bouton j'aime) sur des réseaux sociaux, etc. On prendra dans ce qui suit l'exemple d'éléments de type photographies, étant entendu que l'approche décrite par la suite est aisément transposable aux autres types d'éléments de contenu personnel.

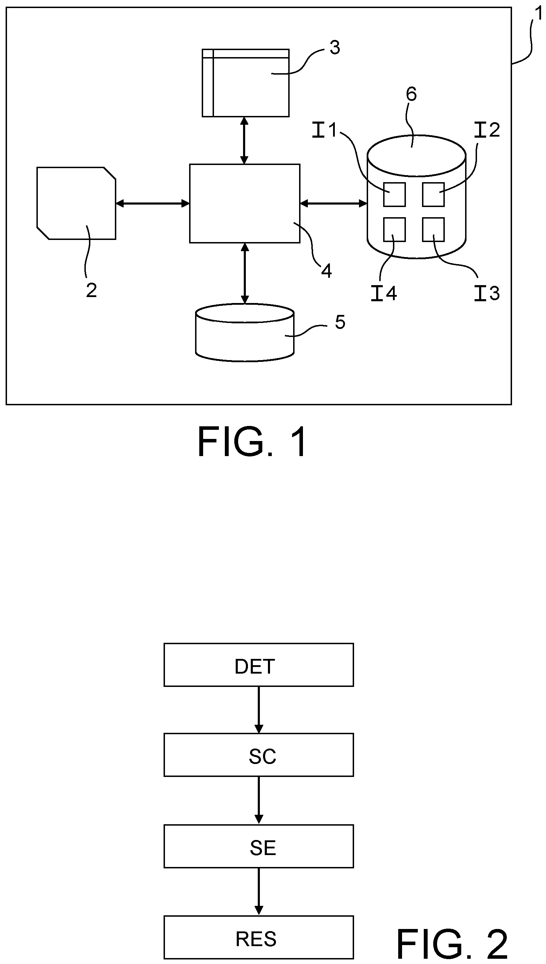

On a représenté sur la figure 1 un schéma d'un dispositif de traitement de données 1, typiquement un terminal d'un utilisateur, qui comprend des moyens configurés pour mettre en oeuvre le procédé selon l'invention. Ce dispositif 1 comprend :

- une mémoire 2 dans laquelle sont stockés des éléments de contenu personnel de l'utilisateur susceptibles d'être téléversés sur la plateforme ;
- une liste 3 de contrôle d'accès aux données personnelles de l'utilisateur qui associe chacun des éléments de contenu personnel de l'utilisateur avec un niveau de restriction d'accès parmi une pluralité de niveaux de restriction d'accès ;
- un calculateur 4 ;
- une base de données 5 qui stocke un modèle de détection d'instances de classes dans un élément de contenu personnel de l'utilisateur. Pour les images, ce modèle est typiquement un modèle issu d'apprentissage, notamment un apprentissage supervisé, par exemple un modèle basé sur le réseau de neurones MobileNet couplé au détecteur connu sous l'acronyme SSD pour « Single Shot multibox Detector » ;
- une base de données 6 qui stocke un ensemble de scores d'impact chacun associé à l'une des classes du modèle de détection.

Dans un mode de réalisation privilégié, la base de données 6 stocke une pluralité d'ensembles de scores d'impact I1-I4 où dans chaque ensemble chaque score d'impact est associé à l'une des classes du modèle de détection et où chaque ensemble est spécifique d'une situation donnée de la vie réelle de l'utilisateur. A titre d'exemple, on peut retrouver un premier ensemble I1 spécifique d'une situation de type recherche de logement, un deuxième ensemble I2 spécifique d'une situation de type recherche de crédit bancaire, un troisième ensemble I3 spécifique d'une situation de recherche d'un emploi d'ingénieur informatique et un quatrième ensemble I4 spécifique d'une situation de recherche d'un emploi de serveur. Les étapes qui seront décrites par la suite pourront ainsi être réalisées, par exemple en parallèle, pour chacune d'une pluralité de situations données de la vie réelle de l'utilisateur au moyen des différents ensembles de scores d'impact I1-I4.

L'invention propose ainsi de modéliser une situation ciblée, typiquement une situation pour laquelle le téléversement d'un élément de contenu personnel est susceptible d'avoir un fort impact, via l'attribution d'un score d'impact aux différentes classes.

Chaque score d'impact associé à une classe du modèle de détection peut être un score prédéterminé à partir de scores fournis par une communauté d'utilisateurs, par exemple une moyenne de ces scores. Cette communauté d'utilisateurs est à même de créer une vérité terrain permettant une modélisation efficace des situations ciblées.

En référence à la figure 2, le procédé selon l'invention comprend une étape DET de détection dans un élément de contenu personnel de l'utilisateur d'au moins une instance de chacune d'une pluralité de classes du modèle de détection et la détermination d'un score de présence de chaque instance.

Prenant l'exemple d'une photographie $P_j^i$ d'un utilisateur $U^i$, le calculateur 4 exploite le modèle de détection pour prédire la présence $d(O^l, P_j^i)$ d'une instance de la classe $O^l$ (ici un objet détectable dans l'image appartenant à une classe d'objet du modèle de détection, par exemple à la classe « livre » ou à la classe « violon »). Par défaut, cette prédiction est fournie pour chacun des objets détectables. En pratique, un score de présence nul peut être attribué à un objet lorsque son niveau de détection est inférieur à un seuil. Ce seuil peut être unique pour tous les objets. On

$$\hat{d}(O^l, P_j^i) = \begin{cases} d(O^l, P_j^i) \; si \; d(O^l, P_j^i) \geq th(O^l) \\ 0 \; sinon \end{cases}$$

peut au contraire adopter un seuil par classe et ainsi prévoir

, avec $th(O^l)$ un seuil associé à la classe $O^l$ et $\hat{d}(O^l, P_j^i)$ le score de présence d'une instance de la classe $O^l$ détectée dans l'image $P_j^i$.

Dans un mode de réalisation alternatif, on peut procéder à une sélection de seuils permettant de répondre aux deux objectifs suivants : (1) déterminer les seuils permettant de maximiser l'utilité d'une classe et (2) sélectionner les classes qui sont le plus utiles dans le contexte.

Dans ce mode de réalisation, on peut tout d'abord calculer

$$\left(\tau^{max}(O^l), th^{max}(O^l)\right) = \max_{\forall th \in [0,1;1]} KT(\varepsilon_v^{th}(O^l), \mathcal{M}_v^{th}(O^l)),$$

où

$\tau^{max}(O^l)$ correspond à la corrélation maximale entre des scores d'exposition d'utilisateurs déterminés par une communauté d'utilisateur (scores manuels) et des scores d'exposition de ces mêmes utilisateurs déterminés automatiquement selon l'invention en ne considérant que les objets de la classe $O^l$ ;
$th^{max}(O^l)$ est un seuil associé à $\tau^{max}(O^l)$ ;
$th$ est le seuil associé à la classe $O^l$ qui est compris entre 0,1 et 1 et qui est testé avec un pas de 0,01 ;
$KT$ est le coefficient de corrélation de Kendall ;
$\varepsilon_v^{th}(O^l)$ et

$$\mathcal{M}_v^{th}(O^l)$$

correspondent respectivement aux ensembles de scores automatiques et de scores manuels pour un ensemble $v$ d'utilisateurs obtenus pour chaque seuil $th$ testé.

L'équation précédente vient optimiser la corrélation entre les scores manuels et automatiques quand une seule classe est détectée. Si différentes valeurs de $th(O^l)$ maximisent $\tau^{max}(O^l)$, la plus petite est retenue afin de maximiser le nombre de détection pour $O^l$.

Les résultats de l'équation précédente doivent être agrégés pour décider quel sous-ensemble de l'ensemble de classes $\mathcal{D} = \{O^1, O^2, ..., O^w\}$ est le plus approprié. La sélection du $\tau^{max}(O^l)$ optimal est réalisé selon

$$\tau^{max}(\mathcal{D}) =$$

$$\max_{\forall \tau \in [-1;1]} KT(\mathcal{E}_\nu^\tau(\mathcal{D}^\tau), \mathcal{M}_\nu^\tau(\mathcal{D}^\tau))$$

, où $\tau$ est une valeur de corrélation entre -1 et 1 testée avec un pas de 0,01 ; $\mathcal{D}^\tau$ est un sous-ensemble de $\mathcal{D}$ ; KT, $\mathcal{E}_\nu^\tau$ et

$$\mathcal{M}_\nu^\tau$$

sont les mêmes que dans l'équation précédente.

Cette dernière équation fournit le seuil de corrélation qui fournit le meilleur sous-ensemble $\mathcal{D}^{max}$ et les scores de présence peuvent alors être exprimés selon :

$$\hat{d}^{max}(O^l, P_j^i) = \begin{cases} d(O^l, P_j^i) \ si \ \tau^{max}(O^l) \geq \tau^{max}(\mathcal{D}) \\ 0 \ sinon \end{cases}$$

Suite à la détermination du score de présence $\hat{d}(O^l, P_j^i)$ ou $\hat{d}^{max}(O^l, P_j^i)$ de chaque instance de la classe $O^l$, le procédé comprend au cours d'une étape SC la détermination, pour chacune des classes, d'un score de classe à partir des scores de présence des instances de la classe et d'un score d'impact associé à la classe $r(O^l)$.

Dans un mode de réalisation, ce score de classe $Sc(O^l)$ est basé sur le score de présence maximal des instances de la classe $\max(\hat{d}(O^l, P_j^i))$ ou $\max(\hat{d}^{max}(O^l, P_j^i))$ et s'exprime alors par exemple selon $\max\left(\hat{d}(O^l, P_j^i)\right) * r(O^l)$ ou $\max\left(\hat{d}^{max}(O^l, P_j^i)\right) * r(O^l)$. En venant sélectionner un seul score de présence, en l'occurrence le score maximal, on n'exagère pas l'impact de la présence d'un objet détecté plusieurs fois dans une même image.

Le procédé comprend ensuite lors d'une étape SE la détermination d'un score d'exposition $S_e(P_j^i)$ de l'élément $P_j^i$ à partir des scores de classe $S_c(O^l)$. On peut par exemple agréger les contributions individuelles de classes en calculant leur somme

$$S_e(P_j^i) = \sum_{l=1}^{w} S_c(O^l).$$

Le procédé se poursuit avec une étape RES de détermination, sur la base du score d'exposition de l'élément, d'un niveau de restriction d'accès à associer à l'élément dans la liste 3 de contrôle d'accès aux données personnelles. Le niveau de restriction est typiquement d'autant plus élevé que le score d'exposition est élevé. La détermination du niveau de restriction peut ainsi comprendre la comparaison du score d'exposition à un ou plusieurs seuils pour sélectionner le niveau de restriction approprié parmi une pluralité de niveaux de restriction. Dans une réalisation possible, des seuils par défaut sont proposés par l'application logicielle, ces seuils pouvant être modifiés par l'utilisateur en fonction de ses préférences liées au téléversement.

Dans un mode de réalisation, ladite pluralité de niveaux de restriction comprend un niveau de restriction interdisant le téléversement de l'élément de contenu personnel, à tout le moins sans action de l'utilisateur visant à contrecarrer cette interdiction. Le procédé selon l'invention comprend ainsi une étape de consultation de la liste de contrôle d'accès 3 pour vérifier si le niveau de restriction d'accès associé à l'élément interdit son téléversement sur la plateforme informatique.

Ladite pluralité de niveaux de restriction peut également comprendre un niveau qui autorise et/ou un niveau qui déconseille le téléversement de l'élément de contenu personnel sur la plateforme informatique. Elle peut également comprendre un niveau qui conseille le téléversement de l'élément de contenu personnel sur la plateforme informatique.

Outre le fait de définir automatiquement un niveau de restriction approprié pour l'élément de contenu personnel, le procédé selon l'invention peut comprendre une étape de présentation, via une interface homme-machine, du niveau de restriction associé à l'élément de contenu personnel. Cette étape de restitution offre à l'utilisateur un retour facilitant sa compréhension des effets potentiels du téléversement de l'élément de contenu personnel dans une ou plusieurs situations ayant un effet potentiellement important sur sa vie réelle.

Dans un mode de réalisation, les étapes précédemment décrites DET, EC, SE, RES sont mises en oeuvre pour chaque élément de la pluralité d'éléments de contenu personnel de l'utilisateur. Le procédé peut alors en outre comprendre la détermination d'un score d'exposition de l'utilisateur $e(U^i)$ à partir des scores d'exposition des éléments de contenu personnel de l'utilisateur. Ce score d'exposition peut s'exprimer selon $e(U^i) = \sum_{j=1}^{v} S_e(P_j^i)$ ou encore selon

$$e(U^i) = \frac{\sum_{j=1}^{v} S_e(P_j^i)}{|\hat{\mathcal{P}}^i|},$$

avec

$$|\hat{\mathcal{P}}^i|$$

le cardinal du sous-ensemble de photographies dans lequel un objet de l'une des classes du modèle de détection a été détecté. Ce dénominateur

$$|\hat{\mathcal{P}}^i|$$

permet de produire un score d'exposition moyenné qui facilite la comparaison des utilisateurs dont les éléments de contenu personnel susceptibles d'être téléversés sont nombreux. Par exemple si le numérateur est identique pour deux utilisateurs, un score d'exposition plus élevé sera associé avec l'utilisateur pour lequel les détections d'objet sont associés à un nombre plus faible d'images. De cette manière, la priorité est donnée aux profils utilisateurs qui comprennent moins d'objets détectés mais avec des scores d'impact plus élevés.

Dans un mode de réalisation possible, le score d'exposition de l'utilisateur $e(U^i)$ est comparé à un score d'exposition de référence. Le score de référence peut être un score déterminé à partir des scores d'une communauté d'utilisateurs de référence. Le score d'exposition de l'utilisateur peut ainsi être contextualisé par rapport par rapport à cette communauté de référence, facilitant son auto-évaluation de son degré d'exposition. Par exemple, un utilisateur susceptible d'être fortement impacté par le téléversement de ses éléments de contenu personnel dans une situation de recherche d'emploi pourra recevoir un message du type « votre profil se classe plus bas que 97% du profil de référence dans une situation de recherche d'emploi ».

L'invention n'est pas limitée au procédé précédemment décrit mais s'étend non seulement à un dispositif de traitement de données comprenant des moyens configurés pour mettre en oeuvre les étapes de ce procédé mais également à un produit programme d'ordinateur comprenant des instructions qui, lorsque le programme est exécuté par un ordinateur, conduisent celui-ci à mettre en oeuvre les étapes du procédé. Par ailleurs, si on a décrit dans ce qui précède une implémentation du procédé au sein du terminal de l'utilisateur, l'invention n'est pas limitée à cette implémentation et s'étend à la mise en oeuvre du procédé par des entités distinctes, par exemple le terminal utilisateur avec la mémoire 2 et un serveur distant mettant en oeuvre la détection des instances des classes du modèle de détection.

## Revendications

1. Procédé mis en oeuvre par ordinateur d'administration du téléversement d'un élément de contenu personnel d'un utilisateur sur une plateforme informatique, comprenant les étapes suivantes :

   la détection (DET) dans l'élément d'une ou plusieurs instances d'une pluralité de classes d'un modèle de détection d'instances de classes et la détermination d'un score de présence de chaque instance ;
   pour chacune des classes, la détermination d'un score de classe (SC) à partir des scores de présence des instances de la classe et d'un score d'impact associé à la classe, les scores d'impact associés aux classes du modèle de détection étant spécifiques d'une situation donnée de la vie réelle de l'utilisateur;

la détermination d'un score d'exposition (SE) de l'élément à partir des scores de classe ;

la détermination, sur la base du score d'exposition de l'élément, d'un niveau de restriction d'accès (RES) à associer à l'élément dans une liste (3) de contrôle d'accès aux données personnelles.

2. Procédé selon la revendication 1, comprenant en outre la consultation de ladite liste de contrôle d'accès pour vérifier si le niveau de restriction d'accès associé à l'élément interdit son téléversement sur la plateforme informatique.

3. Procédé selon la revendication 2, dans lequel la consultation de ladite liste de contrôle d'accès vient également vérifier si le niveau de restriction d'accès associé à l'élément déconseille ou autorise son téléversement sur la plateforme informatique.

4. Procédé selon la revendication 1, dans lequel lesdites étapes suivantes (DET, SC, SE, RES) sont mises en oeuvre pour chaque élément d'une pluralité d'éléments de contenu personnel de l'utilisateur.

5. Procédé selon la revendication 4, comprenant en outre la détermination d'un score d'exposition de l'utilisateur à partir des scores d'exposition des éléments de contenu personnel de l'utilisateur.

6. Procédé selon la revendication 5, dans lequel le score d'exposition de l'utilisateur est comparé à un score d'exposition de référence.

7. Procédé selon l'une des revendications 1 à 6, dans lequel un score de présence nul est attribué à une instance d'une classe lorsqu'un niveau de détection de ladite instance est inférieur à un seuil.

8. Procédé selon la revendication 1 à 7, dans lequel chaque score d'impact associé à une classe du modèle de détection est un score prédéterminé à partir de scores fournis par une communauté d'utilisateurs.

9. Procédé selon la revendication 1, dans lequel l'élément de contenu personnel de l'utilisateur est une photographie et dans lequel les classes du modèle de détection sont des classes d'objets.

10. Dispositif de traitement de données (1) comprenant des moyens configurés pour mettre en oeuvre les étapes du procédé selon la revendication 1.

11. Produit programme d'ordinateur comprenant des instructions qui, lorsque le programme est exécuté par un ordinateur, conduisent celui-ci à mettre en oeuvre les étapes du procédé selon la revendication 1.

**Patentansprüche**

1. Administrationsprozess zum Hochladen eines persönlichen Inhaltes eines Benutzers auf eine Web-Plattform, der die folgenden Schritte umfasst:

Erkennen (DET) in dem Element von einer oder mehreren Instanzen einer Vielzahl von Klassen eines Modells zur Erkennung von Klasseninstanzen und Bestimmen einer Punktzahl für das Vorhandensein jeder Instanz; für jede der Klassen die Bestimmung einer Klassenpunktzahl (SC) aus den Punktzahlen für das Vorhandensein der Instanzen der Klasse und einer der Klasse zugeordneten Auswirkungspunktzahl, wobei die den Klassen des Modells zur Erkennung zugeordneten Auswirkungspunktzahlen spezifisch für eine bestimmte Situation im realen Leben des Benutzers sind; die Bestimmung einer Expositionspunktzahl (SE) des Elements aus den Klassenpunktzahlen; die Bestimmung, auf der Grundlage der Expositionspunktzahl des Elements, eines Zugriffsbeschränkungsniveaus (RES), das dem Element in einer Liste (3) zur Kontrolle des Zugriffs auf persönliche Daten zuzuordnen ist.

2. Prozess nach Anspruch 1, der darüber hinaus die Abfrage der Liste zur Kontrolle des Zugriffs umfasst, um zu überprüfen, ob das Zugriffsbeschränkungsniveau, das mit dem Element verbunden ist, dessen Hochladen auf die Web-Plattform verbietet.

3. Prozess nach Anspruch 2, wobei die Abfrage der Liste zur Kontrolle des Zugriffs auch überprüft, ob das mit dem Element verbundene Zugriffsbeschränkungsniveau von dessen Hochladen auf die Web-Plattform abrät oder es zulässt.

4. Prozess nach Anspruch 1, wobei die folgenden Schritte (DET, SC, SE, RES) für jedes Element aus einer Vielzahl von Elementen des persönlichen Inhalts des Benutzers durchgeführt werden.

5. Prozess nach Anspruch 4, das darüber hinaus die Bestimmung einer Expositionspunktzahl des Benutzers aus den Expositionspunktzahlen der persönlichen Inhaltselemente des Benutzers umfasst.

6. Prozess nach Anspruch 5, bei dem die Expositionspunktzahl des Benutzers mit einer Referenz-Expositionspunktzahl verglichen wird.

7. Prozess nach Anspruch 1 bis 6, wobei einer Instanz einer Klasse eine Anwesenheitspunktzahl von null zugewiesen wird, wenn ein Erkennungsniveau der Instanz unter einem Schwellenwert liegt ist.

8. Prozess nach Anspruch 1 bis 7, wobei jede Auswirkungspunktzahl, die mit einer Klasse des Modells zur Erkennung verbunden ist, eine Punktzahl ist, die aus Punktzahlen vorbestimmt ist, die von einer Gemeinschaft von Benutzern bereitgestellt werden.

9. Prozess nach Anspruch 1, wobei das persönliche Inhaltselement des Benutzers eine Fotografie ist und wobei die Klassen des Modells zur Erkennung Objektklassen sind.

10. Datenverarbeitungsvorrichtung (1) umfassend Mittel, die so konfiguriert sind, dass sie die Schritte des Prozesses nach Anspruch 1 implementieren.

11. Computerprogrammprodukt umfassend Anweisungen, die, wenn das Programm von einem Computer ausgeführt wird, diesen dazu veranlassen, die Schritte des Prozesses nach Anspruch 1 auszuführen.

**Claims**

1. A computer-implemented method for administering uploading of a user's personal content element onto a computing platform, comprising the following steps of:

   detecting (DET) in the element one or several instances of a plurality of classes of a class instance detection model and determining a presence score of each instance;
   for each of the classes, determining a class score (SC) from the presence scores of the instances of the class and an impact score associated with the class, the impact scores associated with the classes of the detection model being specific to a given situation in the user's real life;
   determining an exposure score (ES) for the element from the class scores;
   determining, on the basis of the exposure score of the element, a level of access restriction (RES) to be associated with the element in a personal data access control list (3).

2. The method according to claim 1, further comprising consulting said access control list to check whether the level of access restriction associated with the element prohibits it from being uploaded onto the computer platform.

3. The method according to claim 2, wherein consulting said access control list also checks whether the level of access restriction associated with the element does not recommend or authorises it to be uploaded onto the computer platform.

4. The method according to claim 1, wherein said following steps (DET, SC, SE, RES) are implemented for each element of a plurality of elements of the user's personal content.

5. The method according to claim 4, further comprising determining a user exposure score from the exposure scores of the user's personal content elements.

6. The method according to claim 5, wherein the user's exposure score is compared with a reference exposure score.

7. The method according to any of claims 1 to 6, wherein a zero presence score is assigned to an instance of a class when a detection level of said instance is below a threshold.

8. The method according to claims 1 to 7, wherein each impact score associated with a class of the detection model is a score predetermined from scores provided by a community of users.

9. The method according to claim 1, wherein the user's personal content element is a photograph and wherein the classes of the detection model are object classes.

10. A data processing device (1) comprising means configured to implement the steps of the method according to claim 1.

11. A computer program product comprising instructions which, when the program is executed by a computer, cause the same to implement the steps of the method according to claim 1.

FIG. 1

FIG. 2